(19) Europäisches Patentamt

European Patent Office

Office européen des brevets

(11) **EP 0 945 179 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(51) Int Cl.7: **B01J 23/42**, B01J 37/08, C01B 21/24

(21) Anmeldenummer: **99104843.0**

(22) Anmeldetag: **11.03.1999**

(54) **Platin-enthaltender Katalysator zur Gewinnung von Stickstoffmonoxid und Verfahren zu seiner Herstellung**

Platinum-containing catalyst for the production of nitrogen monoxide and process for its preparation

Catalyseur à base de platine pour la fabrication de monoxyde d'azote et procédé pour sa préparation

(84) Benannte Vertragsstaaten:
**BE CH DE ES FR IT LI NL**

(30) Priorität: **21.03.1998 DE 19812509**

(43) Veröffentlichungstag der Anmeldung:
**29.09.1999 Patentblatt 1999/39**

(73) Patentinhaber: **Domo Caproleuna GmbH**
**06234 Leuna (DE)**

(72) Erfinder:
• **Kretschmar, Manfred**
  **06122 Halle (DE)**
• **Leetsch, Norbert**
  **06237 Leuna (DE)**

(74) Vertreter: **Schinke, Herbert, Dr. Dr.,**
**Patentanwaltskanzlei**
**Postfach 11 11**
**06234 Leuna (DE)**

(56) Entgegenhaltungen:
**US-A- 5 155 081**

• **DATABASE WPI Section Ch, Week 199613 Derwent Publications Ltd., London, GB; Class E36, AN 1996-127559 XP002131840 -& RU 2 039 006 C (UKR NITROGEN ORG SYNTH PRODUCTS INST), 9. Juli 1995 (1995-07-09)**

**Beschreibung**

Die Erfindung betrifft einen verbesserten Katalysator zur Gewinnung von Stickstoffmonoxid durch Reduktion von Salpetersäure und ein Verfahren zu seiner Herstellung.

Für die Gewinnung von Stickstoffmonoxid durch Reduktion von Salpetersäure werden verschiedene Platinkatalysatoren verwendet.

In einem bekannten Verfahren zur Herstellung von Stickstoffmonoxid aus Salpetersäure durch Ammoniakreduktion in der Dampfphase bei einer Temperatur von 250 bis 270 °C wird ein reiner Platinkatalysator in Form eines Netzes eingesetzt (DE 2200343).

Die Verwendung dieses Katalysators gewährleistet jedoch keine ausreichend hohe Gewinnung von Stickstoffmonoxid; außerdem ist das erzeugte Stickstoffmonoxid durch andere stickstoffhaltige Bestandteile verunreinigt.

Bekannt ist auch ein Platinkatalysator für die katalytische Reduktion von Sauerstoffverbindungen des Stickstoffs mit Wasserstoff, wobei Platin auf Graphit aufgetragen und mit Schwefel modifiziert wird. Er wird durch Reduktion von Platin(IV)-Verbindungen in wäßriger Lösung zu Platin(II)-Verbindungen und anschließender nochmaliger Reduktion von Platin(II)-Verbindungen zu Platin mit gleichzeitiger Fixierung auf Elektrographit sowie Einführung schwefelhaltiger Verbindungen in einer Menge bis zu 25 Atom-% im Verhältnis zu Platin hergestellt (DE 1088037). Der Vorteil dieses Katalysators besteht darin, daß der Platin-Gehalt den Wert von 0,5 Masse-% nicht übersteigt und somit kostengünstig ist.

Nachteil dieses Katalysators ist aber dessen niedrige Aktivität in der Hydrierreaktion von Salpetersäure zu Stickstoffmonoxid und einer wesentlichen Verunreinigung des Hydrierproduktes mit stickstoffhaltigen Verbindungen, da das gebildete Stickstoffmonoxid an diesem Katalysator weiter zu Hydroxylamin, Ammoniak und Distickstoffoxid hydriert wird.

In den letzten Jahren wurde ein Verfahren zur Herstellung von Stickstoffmonoxid durch Reduktion von 0,3 bis 15 Masse-%iger Salpetersäure mit Wasserstoff in Gegenwart eines Katalysators, der Platin, Platin(II)-sulfid und Platin(IV)-oxid auf einem Graphitträger enthält, entwickelt. Der Katalysator wird aufbereitet durch Tränken des Graphitträgers mit Hexachloroplatinsäure, nachfolgender Reduktion der Platin(IV)-Verbindungen in einer sauren wäßrigen Lösung zu Platin und anschließender Überführung von Platin in die Sulfidform durch Behandlung mit einer schwefelhaltigen Verbindung. Nach Filtration und Waschen mit Wasser wird der Katalysator zusätzlich mit 1 bis 15 Masse-%iger Salpetersäure 0,5 bis 2 Stunden bei einer Temperatur von 60 bis 90 °C behandelt (RU 2039006). Mit Hilfe dieses Katalysators gelang es. die Ausbeute des hergestellten Stickstoffmonoxides zu erhöhen und den Gehalt der stickstoffhaltigen Beimischungen im Fertigprodukt zu reduzieren.

Andererseits besteht der wesentliche Nachteil dieses Katalysators in einer unzureichenden Aktivität und dem schnellen Verlust der Anfangsaktivität auf Grund der geringen Beständigkeit der Platinoxide, was ein häufiges Entfernen des Katalysators aus dem System bedingt, um ihn einer Regenerierung zu unterziehen.

Aufgabe der vorliegenden Erfindung war es daher, durch Änderung seiner Zusammensetzung einen verbesserten Katalysator zur Gewinnung von Stickstoffmonoxid aus Salpetersäure zu entwickeln und durch Änderung der technologischen Prozeßparameter seiner Herstellung eine langanhaltend hohe Aktivität und Stabilität zu gewährleisten Das soll dazu führen. die Arbeitszeit des Katalysators zwischen den Regenerationen zu erhöhen.

Erfindungsgemäß wurde ein Katalysator zur Gewinnung von Stickstoffmonoxid entwickelt, der aus Platin und Platinverbindungen auf einem Graphitträger besteht, der die Komponenten in folgenden Verhältnissen in Masse-% enthält:

| Platin | 0,21 bis 0,45 |
|---|---|
| Platin(IV)-oxid | 0,04 bis 0,09 |
| Graphitträger | Rest (99,46 bis 99,75 %). |

Dieser Katalysator weist bereits höhere Aktivitäten und eine größere Beständigkeit als die bekannten Katalysatoren auf. Das Ergebnis wird noch verbessert, wenn der Katalysator durch ein spezielles Herstellungsverfahren gewonnen wird.

So wurde ein Verfahren der Herstellung des Katalysators durch Tränken des Graphitträgers mit Hexachloroplatinsäure, anschließender Reduktion der Platin(IV)-Verbindungen in einer sauren wäßrigen Lösung, beispielsweise durch Ameisensäure, zu Platin, nachfolgender Abkühlung der entstandenen Suspension, Filtrieren und Waschen des festen Katalysators mit Wasser gefunden, das dadurch verbessert wurde, daß der Katalysator nach dem Waschen getrocknet und dann 0,5 bis 3 Stunden in Luft bei Temperaturen von 100 bis 150 °C wärmebehandelt wird.

Der Vorteil des erfindungsgemäßen Katalysators besteht darin, daß durch die veränderte Zusammensetzung und Wärmebehandlung die Beständigkeit der Platinoxide steigt und der Katalysator somit eine vierfach höhere Aktivität im Vergleich zur Aktivität des Katalysators gemäß RU 2039006 besitzt. Seine Anfangsaktivität ist außerdem über längere Zeit gleichbleibend, was zur Erhöhung der Arbeitszeit des Katalysators führt.

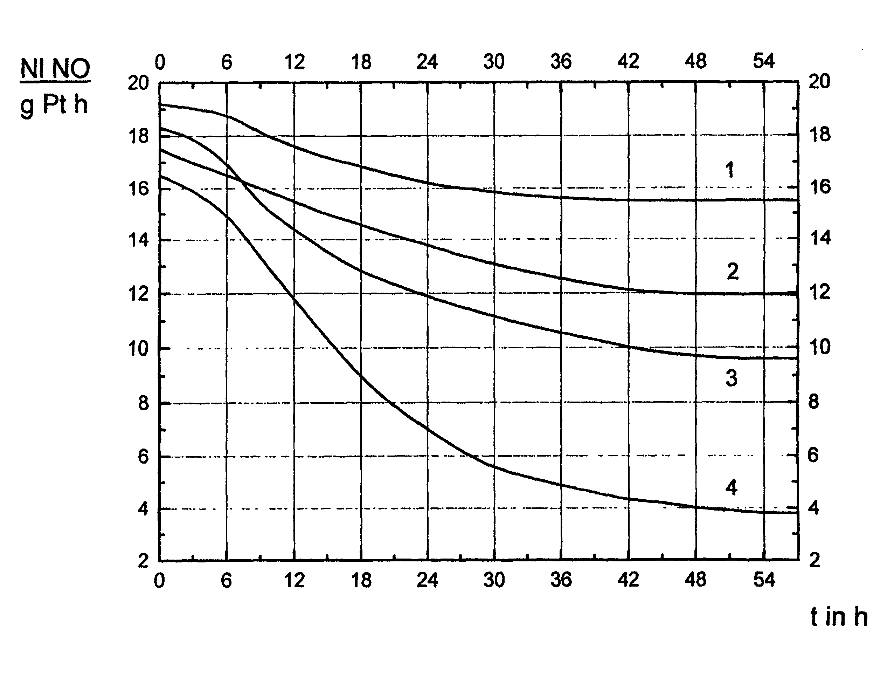

Abb. 1 zeigt die zeitliche Änderung der Hydriergeschwindigkeit der Salpetersäure

Auf der Ordinate ist die Aktivität (Menge NO in Liter pro g Platin und pro Stunde) auf der Abszisse die Zeit in Stunden eingetragen.

Die Kurven zeigen den Verlauf der Aktivität bei folgenden Katalysatoren:

1. Zusammensetzung nach Anspruch 1, hergestellt nach Anspruch 2.
2. Zusammensetzung nach Anspruch 1, hergestellt ohne Wärmebehandlung.
3. Katalysator enthält Platin(II)-sulfid, hergestellt nach Anspruch 2.
4. Katalysator enthält Platin(II)-sulfid, hergestellt ohne Wärmebehandlung (nach SU 2039006).

**Beispiel 1** (Katalysator nach Anspruch 1, Herstellung nach Anspruch 2)

Für die Herstellung des Katalysators füllt man 750 ml Wasser in den Reaktor und fügt unter Rühren 1000 g Graphitträger hinzu, erwärmt die Suspension auf eine Temperatur von 90 °C, gibt 13,51 g Hexachloroplatinsäurelösung mit einem Platin-Gehalt von 37 Masse-% in 20 ml Wasser hinzu, versetzt sie mit 100 ml wäßriger 35%iger Salzsäurelösung und 24 ml wäßriger 60%iger Salpetersäurelösung. Nach 5stündigem Rühren bei einer Temperatur von 90 °C gibt man 625 ml Wasser hinzu, um eine Schaumbildung zu verhindern, und unter Rühren stellt man den pH-Wert der Lösung auf 3,0 bis 3,5 ein, indem man Natriumcarbonat dosiert zugibt. Dann fügt man bis zu 50 g Natriumacetat bis zum Erreichen eines pH-Wertes von 5,5 zu. Durch Ver-setzen des Reaktionsgemisches mit 75 ml Ameisensäure wird Platin(IV) zu Platin gemäß folgender Reaktion reduziert:

$$PtCl_4 + 2\ HCOOH \rightarrow Pt + 4\ HCl + 2\ CO_2$$

Die Suspension läßt man abkühlen, filtriert den Katalysator ab und wäscht mit Wasser bis zur neutralen Reaktion des Spülwassers, trocknet und behandelt dann 2 Stunden in Luft bei einer Temperatur von 140 °C.

Man erhält somit einen Katalysator mit

0,423 Masse-% Platin
0.077 Masse-% Platin(IV)-oxid
auf dem Graphitträger (99,5 %).

3,5 g Katalysator und 250 ml 3%ige Salpetersäure werden in den Hydrierreaktor gefüllt. Unterhalb des Rührers wird Wasserstoff in den Reaktor zugeführt, während aus dem oberen Teil die Gasphase abgeführt wird. Die Reaktion verläuft bis zu einer Konzentration der Salpetersäure von 0,45 Masse-%, im weiteren wird diese Konzentration durch Zugabe von konzentrierter Salpetersäure stabil gehalten.

Die Eigenschaften dieses Katalysators bei der Salpetersäurehydrierung zeigt Kurve 1 der Abbildung.

**Beispiel 2** (Katalysator nach Anspruch 1)

Zum Vergleich bereitet man einen Katalysator nach Beispiel 1. Nach dem Waschen des filtrierten Katalysators wird dieser eine Stunde mit 3%iger Salpetersäure bei 80 °C behandelt.

0,442 Masse-%     Platin
0,058 Masse-%     Platin(IV)-oxid
Rest                     Graphitträger.

Die Eigenschaften dieses Katalysators bei der Salpetersäurehydrierung zeigt Kurve 2 der Abbildung. Obwohl dieser nicht nach dem erfindungsgemäßen Verfahren hergestellt ist, werden bessere Werte als bei bekannten Katalysatoren erzielt.

**Beispiel 3** (Herstellung eines Katalysators nach Anspruch 2)

Kurve 3 der Abbildung zeigt die Eigenschaften eines Katalysators gemäß SU 2039006, d. h. mit der Zusammensetzung

0,31 Masse-%     Platin

0,07 Masse-% Platin(IV)-oxid
0,12 Masse-% Platin(II)-sulfid
Rest Graphitträger.

Dieser Katalysator wurde dann gemäß Beispiel 1 und abweichend von der Nachbehandlung in RU 2039006 erfindungsgemäß nach dem Waschen getrocknet und dann 2 Stunden bei 140 °C wärmebehandelt.

Die Kurve 3 zeigt, daß dieser durch die Wärmebehandlung zwar besser als die nach bekannten Verfahren hergestellten Katalysatoren ist, aber nicht die Qualität des nach Anspruch 1 zusammengesetzten Katalysators erreicht.

**Beispiel 4** (Vergleichsbeispiel)

Dieser Katalysator hat die Zusammensetzung gemäß RU 2039006 und ist auch nach diesem Patent hergestellt worden, d. h. durch 1stündige Behandlung mit 3%iger Salpetersäure bei 80 °C nach dem Waschen des filtrierten Katalysators.

Die Eigenschaften dieses Katalysators bei der Salpetersäurehydrierung gibt Kurve 4 der Abbildung.

Die 4 Kurven zeigen insgesamt, daß ein erfindungsgemäßer Katalysator nach Anspruch 1 und 2 die besten Eigenschaften hat, der nach dem Stand der Technik (RU 2039006) die schlechtesten. Bei teilweiser Anwendung der erfinderischen und der bekannten Lösungen treten Zwischenwerte auf.

**Patentansprüche**

1. Katalysator zur Gewinnung von Stickstoffmonoxid durch Reduktion von Salpetersäure, der Platin und Platinverbindungen enthält, **dadurch gekennzeichnet, daß** dieser aus

   0,21 bis 0,45 Masse-% Platin und
   0,04 bis 0,09 Masse-% Platin(IV)-oxid
   auf Graphitträger (99,46 bis 99,75 Masse-%)

   besteht.

2. Verfahren zur Herstellung eines Katalysators gemäß Anspruch 1 zur Gewinnung von Stickstoffmonoxid aus Salpetersäure durch Tränken eines Graphitträgers mit Hexachloroplatinsäure, Reduktion der Platin(IV)-Verbindungen in saurer wäßriger Lösung zu Platin, Abkühlen der entstandenen Suspension, Filtrieren und Waschen des festen Katalysators, **dadurch gekennzeichnet, daß** der Katalysator nach dem Waschen getrocknet und dann 0,5 bis 3 Stunden in Luft bei Temperaturen von 100 bis 150 °C wärmebehandelt wird.

**Claims**

1. A catalyst for obtaining nitrogen monoxide by reducing nitric acid and containing platinum or platinum compounds, **characterized in that** said catalyst consists of

   0.21 to 0.45 pbw of platinum and
   0.04 to 0.09 pbw of platinum(IV) oxide
   on a graphite substrate (99.46 to 99.75 pbw).

2. A method of producing the catalyst according to claim 1 for obtaining nitrogen monoxide from nitric acid by soaking a graphite substrate with hexachloroplatinic acid, reducing the platinum(IV) compounds in an acidic hydrous solution to platinum, cooling the obtained suspension, filtering and washing the solid catalyst, **characterized in that** the catalyst is dried after washing and thermally treated in air for 0.5 to 3 hours at temperatures from 100°C to 150°C.

**Revendications**

1. Catalyseur pour récupérer du monoxyde d'azote par réduction d'acide azotique, lequel contient du platine et des composés de platine, **caractérisé en ce que** celui-ci est constitué par :

0,21 à 0,45 % en masse de platine, et
0,04 à 0,09 % en masse d'oxyde platinique (IV),
sur des substrats de graphite (99,46 à 99,75 % en masse).

2. Procédé pour réaliser un catalyseur selon la revendication 1, pour récupérer du monoxyde d'azote à partir d'acide azotique par imbibition d'un substrat de graphite avec de l'acide d'hexachloroplatine, par réduction en platine des composés platiniques (IV) dans une solution aqueuse acide, par refroidissement de la suspension formée, et par filtrage et lavage du catalyseur solide, **caractérisé en ce qu'**après le lavage le catalyseur est séché et ensuite traité thermiquement à l'air à des températures de 100 à 150°C pendant 0,5 à 3 heures.